# EUROPEAN PATENT APPLICATION

(11) **EP 0 531 262 A2**
(43) Date of publication of application: **10.03.1993**
(21) Application number: 92830388.2
(22) Date of filing: 16.07.1992
(51) Int. Cl.: F16K 15/06

(54) **Safety valve for pressure vessels such as coffee machines, electric iron boilers, steam floor washing machines and the like**

(30) Priority: 22.07.1991 IT MI910665 U
(71) Applicant: Zani, Gianmauro, I-28037 Domodossola (Novara) (IT)
(72) Inventor: Zani, Gianmauro, I-28037 Domodossola (Novara) (IT)
(74) Representative: Cicogna, Franco

(57) **Abstract**

There is disclosed a safety valve for pressure vessels such as coffee machines, electric iron boilers, steam floor washing machines and the like, which comprises, substantially, a disc-like shutter element which is driven along the axis of the loading mouth of the vessel, so as to close this mouth under the pushing force exerted by the pressure in the vessel and practically providing a sealing element which can be considered as functionally equivalent to a check valve, the disc element, as no pressurized steam is held in the vessel, falling downwardly so as to open-free the vessel mouth.

## Description

### BACKGROUND OF THE INVENTION

The present invention relates to a safety valve for pressure vessels such as coffee machines, electric iron boilers, steam floor washing machine and the like.

As is known there are at present broadly used household apparatus and appliances operating based on pressurized steam supplied by a steam boiler.

Also known is the fact that these steam boilers, which may form a single body with the apparatus casing, are necessarily provided with a sealing plug for allowing the boiler vessel to be refilled as the water herein has been exhausted.

Obviously, the removal of this plug can be exclusively made as in the boiler there is not present pressurized steam, the leakage of which would deleteriously damage the user.

Accordingly, means are conventionally provided for preventing the sealing plug from being turned as inside the boiler is present a pressure greater than the atmospheric pressure.

These prior means or mechanisms, however, are very complex from a construction point of view, since they usually require great modifications both to the sealing plug and to the water filling mouth thereon the plug must be tightly applied.

Moreover, it should be pointed out that prior safety devices associated with pressure vessels or boilers for a household use, require a cooperating relationship between elements respectively formed on the plug and on the vessel mouth.

This fact, on the other hand, may negatively affect a reliable operation of the device, since one of the above mentioned cooperating elements can be undesirably locked.

In such a case, the plug could not be easily removed from the water filling mouth, even if inside the boiler there is lacking pressurized steam.

### SUMMARY OF THE INVENTION

Accordingly, the aim of the present invention is to overcome the above mentioned drawbacks, by providing a safety valve, for household pressurized steam apparatus, which is designed so as to safely protect the user from possible dangerous leakages of steam from the vessel, and this mainly in the case in which the sealing plug is removed from the vessel.

Within the scope of the above aim, a main object of the present invention is to provide a safety valve for household pressurized steam apparatus which is very simple construction-wise and very reliable in operation.

Yet another object of the present invention is to provide such a safety valve for pressure vessels of household apparatus which allows the sealing plug to be easily and quickly removed as water must be refilled in the vessel.

According to one aspect of the present invention, the above mentioned aim and objects, as well as yet other objects, which will beforme more apparent hereinafter, are achieved by a safety valve for pressure vessels, such as coffee machines, electric iron boilers, steam floor washing machines and the like, characterized in that said safety valve comprises a disc-like shutter element which can be driven along an axis of a vessel water filling mouth, to tightly close the mouth opening under the pushing force provided by the pressure inside the vessel, so as to operate as a check valve-like sealing element, the disc element downwardly falling so as to open the vessel filling mouth as inside the vessel no pressurized steam is present.

### BRIEF DESCRIPTION OF THE DRAWINGS

Further characteristics and advantages of the safety valve for pressure vessels such as coffee machines, electric iron boilers, steam floor washing machines and the like, will become more apparent hereinafter from the following detailed disclosure of preferred embodiments of said valve which are illustrated, by way of an indicative but not limitative example, in the figures of the accompanying drawings, where:
Figure 1 is a vertical cross-sectional view showing the safety valve according to the invention mounted on the water filling mouth of a pressure vessel, the vessel being shown in its water lacking condition and with its closure plug removed;
Figure 1a is a top partial view specifically showing the filling mouth of the pressure vessel;
Figure 2 illustrates the safety valve in its position shutting off the filling mouth of the vessel;
Figures 3 and 4 show different methods for removably connecting the shutter disc element to the filling mouth of the pressure vessel; and
Figure 5 illustrates a modified embodiment of the body of the valve shown in Figures 1 and 2.

### DESCRIPTION OF THE PREFERRED EMBODIMENT

With reference to the figures of the accompanying drawings, the safety valve for pressure vessels, such as coffee machines, electric iron boilers, steam floor washing machines and the like, essentially comprises a disc-like element 1 provided, at its top face, with a sealing annular gasket 2.

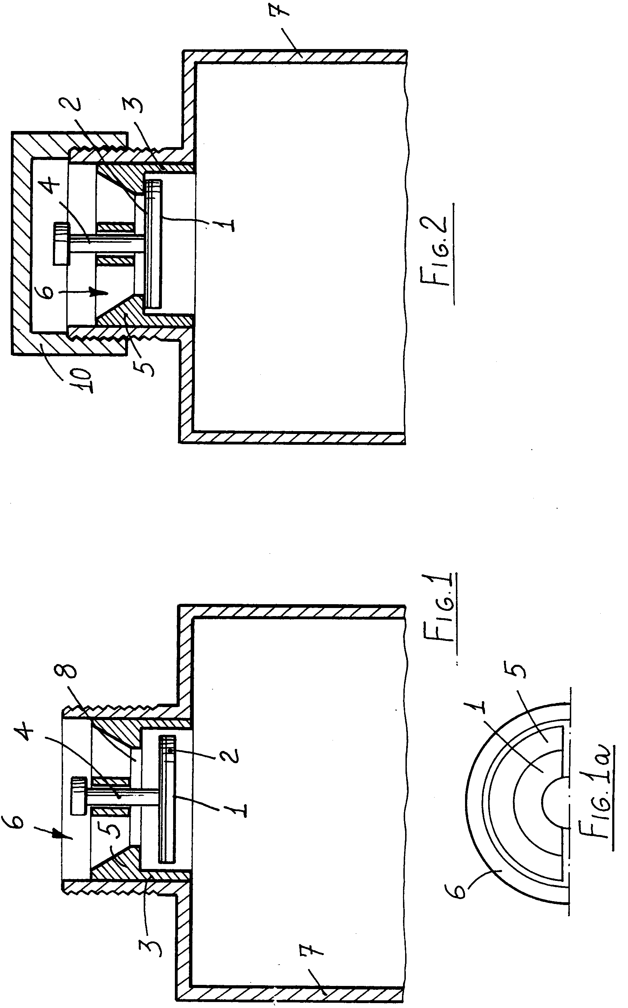

More specifically, this disc-like element, as is shown in Figures 1, 2 and 5, is connected to a valve body, generally indicated at the reference number 3, by means of a guide small piston 4 which upwardly extends.

The mentioned valve body,which, at the top thereof, is provided with a frustum of cone shaped portion 5 defining a stop abutment for the disc-like element, is tightly introduced into the water loading or filling mouth 6 of the generic pressure vessel or boiler 7, or it is directly formed on the inner wall of the filling mouth itself.

In this connection it should be pointed out that said valve body is further provided with an intermediate perforated cross wall 8 which slidably restrains said piston.

On the outer wall of said filling or loading mouth, there is moreover provided a suitably , threaded portion 9 adapted to be engaged by a threaded plug element 10.

Thus, as inside the boiler the steam generation is started, the steam pressure will act on the shutter disc element 1 so as to upwardly push the latter to close said water mouth and prevent the steam from leaking to the outside.

Thus, with pressurized steam present inside the vessel 7, it is not possible to introduce into said vessel water, but, on the other hand, the plug element 10 can be anyhow easily disengaged.

On the other hand, as the steam pressure against the shutter disc element is not sufficient, this disc element will downwardly fall, thereby allowing the user to introduce fresh water into the boiler, while preventing undesired steam jets from being ejected.

In particular, in order to facilitate the water filling in operation, it will be sufficient to associate a suitable cock to the top portion of the boiler and hold this cock opened during the filling operation.

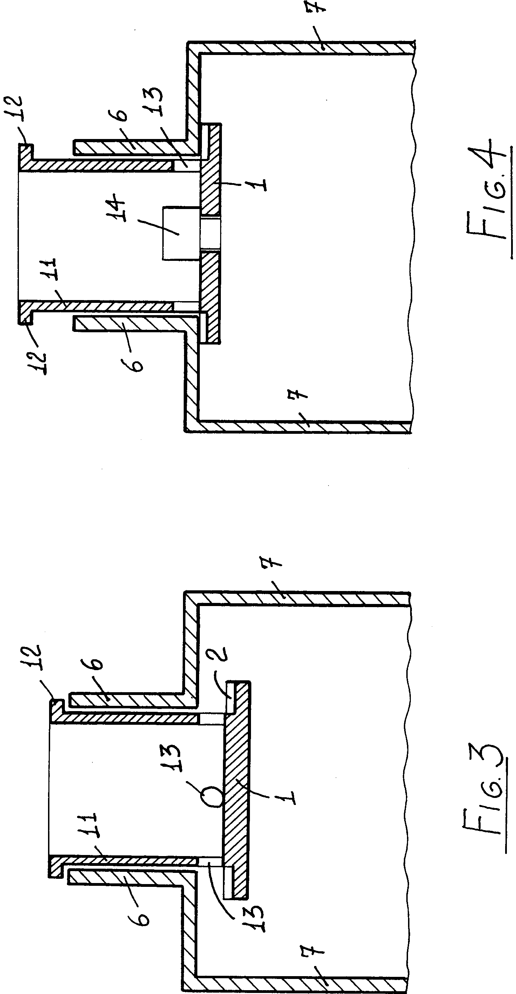

Advantageously, as is shown in Figures 3 and 4, the valve body can comprise a push element 11 provided with an engagement collet 12 engaging on the edge of the water fill-in mouth 6.

In this case, the shutter or sealing disc 1 will be formed at the bottom portion of said bush element which will be moreover provided with a plurality of perimetrical throughgoing holes 13 formed near said bottom portion.

Obviously the shutter or sealing disc element will be so designed as to abut on the mouth of the boiler, and it can be also provided with a further safety valve 14 adapted to control the pressure inside the boiler.

The body valve 3 shown in Figures 1 and 2, in particular, can be advantageously formed at the bottom portion 15, having an outer thread, of a hollow casing 16 preferably of funnel shape.

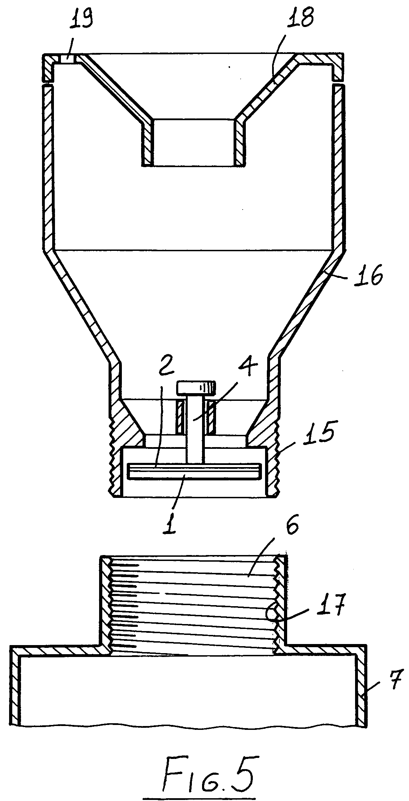

In this case, as it should be apparent, a like thread 17 will be provided on the inner wall of the fill-in mouth, in order to engage therein the mentioned hollow casing or structure (Figure 5).

A suitable removable cover element 18 is moreover provided for association on the funnel structure, in order to hold therein the excess water and being provided with air releasing holes 19.

This funnel like construction will substantially facilitate the filling-in of water into the boiler, while preventing steam jets from being ejected and preventing the user from adding water as the boiler is in a pressurized condition.

Moreover, the specific frustum of cone shaped shape of this structure will prevent water from over-flowing during the boiler filling-in operation.

From the above disclosure and the observation of the figures of the accompanying drawings, the great functionality and facility of use characterizing the safety valve for pressure vessels according to the present invention will be self evident.

While the invention has been disclosed and illustrated with reference to a preferred embodiment thereof, it should be apparent that -the disclosed embodiment is susceptible to several modifications and variations all of which will come within the spirit and scope of the appended claims.

## Claims

1. A safety valve for pressure vessels, such as coffee machines, electric iron boilers, steam floor washing machines and the like, characterized in that said safety valve comprises a disc-like shutter element which can be driven along an axis of a vessel water filling mouth, to tightly close the mouth opening under the pushing force provided by the pressure inside the vessel, to operate as a check valve-like sealing element, the disc element downwardly falling so as to open the vessel filling mouth as inside the vessel no pressurized steam is present.

2. A safety valve for pressure vessels according to Claim 1, characterized in that said disc-like shutter or sealing element is provided, at a top face thereof, with an annular sealing gasket, and being restrained to a valve body by means of an upwardly extending guide piston.

3. A safety valve for pressure vessels according to Claims 1 and 2, characterized in that said valve body is provided at the top thereof with a frustum of cone shaped portion providing a stop abutment for said disc-like element, and being tightly engaged in said mouth.

4. A safety valve for pressure vessels according to one or more of the preceding claims, characterized in that said disc- like element is directly formed on the inner wall of said mouth.

5. A safety valve for pressure vessels according to one or more of the preceding claims, characterized in that said valve body is provided with an intermediate cross separating perforated wall adapted to slidably restrain said piston.

6. A safety valve for pressure vessels according to one or more of the preceding claims, characterized in that on an outer wall of said mouth there is provided a threaded portion to be engaged by a like threaded plug element.

7. A safety valve for pressure vessels according to one or more of the preceding claims, characterized in that said valve body comprises a bush element including an abutment collet engaging on an edge portion of said mouth and bearing at a bottom portion thereof said disc-like element, a plurality of throughgoing holes there being provided above said dis-like element through the wall of said bush element.

8. A safety valve for pressure vessels according to one or more of the preceding claims, characterized in that said disc-like element is so designed as to abut on said mouth and being provided with a further safety valve element for controlling the pressure inside said boiler or vessel.

9. A safety valve for pressure vessels according to one or more of the preceding claims, characterized in that said valve body is formed at a bottom threaded portion of a hollow structure having a substantially frustum of cone shaped shape engaging with a like thread formed on the inner wall of said mouth.

10. A safety valve for pressure vessels according to one or more of the preceding claims, characterized in that with said frustum of cone shaped structure a removable cover element cooperates for holding the excess water and being provided with air releasing holes.
